# EUROPEAN PATENT SPECIFICATION

(11) **EP 4 489 511 B1**
(45) Date of publication and mention of the grant of the patent: **09.09.2026**
(21) Application number: 23794940.9
(22) Date of filing: 30.03.2023
(51) Int. Cl.: H04W 76/27, H04W 24/08, H04B 17/382, H04W 72/02, H04W 74/0808, H04W 92/18

(54) **CHANNEL ACCESS PROCESSING METHOD AND APPARATUS APPLIED TO SIDELINK, AND NETWORK-SIDE DEVICE**
AUF SIDELINK ANGEWENDETES KANALZUGRIFFSVERARBEITUNGSVERFAHREN UND VORRICHTUNG SOWIE NETZWERKSEITIGE VORRICHTUNG
PROCÉDÉ ET APPAREIL DE TRAITEMENT D'ACCÈS À UN CANAL APPLIQUÉS À UNE LIAISON LATÉRALE, ET DISPOSITIF CÔTÉ RÉSEAU

(30) Priority: 28.04.2022 CN 202210470995
(43) Date of publication of application: 08.01.2025
(73) Proprietor: CICT Connected and Intelligent Technologies Co., Ltd., Chongqing 400041 (CN)
(72) Inventor: WANG, Yakun, Chongqing 400000 (CN); ZHAO, Rui, Chongqing 400000 (CN); WEN, Xiaoran, Chongqing 400000 (CN); LIU, Yanqiang, Chongqing 400000 (CN)
(74) Representative: Murgitroyd & Company
(86) International application number: PCT/CN2023/085133
(87) International publication number: WO 2023/207505

(56) References cited:
- WO-A1-2020/191769
- WO-A1-2022/061754
- CN-A- 114 051 747
- KR-A- 20200 105 406
- US-A1- 2021 092 783
- US-A1- 2021 195 637
- US-A1- 2022 039 161
- US-A1- 2022 061 095

## Description

### TECHNICAL FIELD

The present disclosure relates to the technical field of communications, and in particular, to a channel access processing method, a terminal device, and a readable storage medium.

### BACKGROUND

The 3rd Generation Partnership Project (3GPP) introduced sidelink over an unlicensed spectrum (SL-U) in the related art. Compared with the communication mechanism over licensed spectrum, a device over an unlicensed spectrum does not need to get permission to use the spectrum. Therefore, in order to avoid mutual interference between different systems, a listen before talk (LBT) mechanism needs to be introduced.

The relationship and processing procedures between resource selection, resource transmission, and LBT for SL-U in the related art is not definite. Although some designs of new radio over an unlicensed spectrum (NR-U) can be used, it is necessary to consider impact of a distributed resource allocation mechanism used in sidelink (direct link, or translated as secondary link, side link, edge link, or the like) on LBT. For example, the lack of centralized scheduling from a base station leads to discontinuous transmission between different terminals, which in turn causes interruption of continuous channel occupancy. Therefore, it is necessary to devise a new LBT processing procedure and method based on relevant characteristics of the sidelink. In conclusion, the LBT mechanism for SL-U is not yet clear, and related processing procedures need to be standardized and defined during the standardization process. WO2022/061754A1 provides a COT sharing method for Sidelink SL communication in Unlicensed band. The method comprises receiving, at a first device and from a second device, configuration information associated with a COT at least for a SL transmission of the first device on an unlicensed resource pool allocated for the first device, the configuration information at least indicating whether a listen before talk procedure is required to be performed at the first device within the COT before the SL transmission; and performing the SL transmission within the COT based on the configuration information.

### SUMMARY

The invention is as defined in the appended set of claims.

### BRIEF DESCRIPTION OF THE DRAWINGS

FIG. 1 is a flowchart of a processing method applied to a first terminal according to an embodiment of the present disclosure.
FIG. 2 is a structural diagram according to a first specific embodiment of the present disclosure.
FIG. 3 is a structural diagram according to a second specific embodiment of the present disclosure.
FIG. 4 is a structural diagram according to a third specific embodiment of the present disclosure.
FIG. 5 is a structural diagram according to a fourth specific embodiment of the present disclosure.
FIG. 6 is a structural diagram according to a fifth specific embodiment of the present disclosure.
FIG. 7 is a flowchart of a processing method applied to a second terminal according to an embodiment of the present disclosure.
FIG. 8 is a structural diagram according to a sixth specific embodiment of the present disclosure.
FIG. 9 is a structural diagram according to a seventh specific embodiment of the present disclosure.
FIG. 10 is a schematic modular diagram of a processing apparatus according to an embodiment of the present disclosure.
FIG. 11 is a schematic modular diagram of a processing apparatus according to an embodiment of the present disclosure.
FIG. 12 is a structural diagram of a mobile terminal according to an embodiment of the present disclosure.
FIG. 13 is a structural diagram of a network side device according to an embodiment of the present disclosure.
FIG. 14 is a structural diagram of transmitting a placeholder message according to an embodiment of the present disclosure.

### DETAILED DESCRIPTION OF THE EMBODIMENTS

To make the technical problems to be solved, technical solutions, and advantages of the present disclosure clearer, a detailed description is provided below with reference to the accompanying drawings and specific embodiments.

In the embodiments of the present disclosure, it should be understood that, sequence numbers of the following processes do not mean execution sequences. The execution sequences of the processes depend on functions and internal logic of the processes, and should not be construed as any limitation on the implementation processes of the embodiments of the present disclosure.

In addition, the terms "system" and "network" herein may often be used interchangeably.

The terms "first", "second", and the like in the specification and claims of the present disclosure are used to distinguish between similar objects, rather than to describe a particular order or a sequential order. It should be understood that the data termed in such a way is interchangeable in proper circumstances, so that the embodiments of the present application can be implemented in an order other than that illustrated or described herein. In addition, "first" and "second" are generally used to distinguish objects of the same category, rather than to define the number of objects. For example, there may be one first object or a plurality of first objects. Moreover, "and/or" used in the specification and claims means at least one from the connected objects, and the character "/" generally indicates an "or" relationship between the associated objects.

Before the embodiments of the present disclosure are described, some concepts used in the following description are first explained.
1. Unlicensed spectrum: can be used for free by any group or individual without applying for it. For example, the commonly used technologies such as WiFi (wireless network communication technology) and Bluetooth all use the unlicensed spectrum. In order to avoid interference between systems, it is necessary to avoid interference to other systems as much as possible when using the unlicensed spectrum. Therefore, LBT technology is introduced. Before accessing a channel, it is necessary to sense the channel and access the channel only when the system is detected to be idle.
2. Listen-before-talk (LBT) mechanism:
   A terminal over an unlicensed spectrum needs to perform channel detection before channel access. Only when a channel is detected to be idle, the terminal is allowed to access the channel and transmit a service to be transmitted. The channel detection includes the following methods.

### (1) Type 1 channel access method:

The terminal first determines a channel access priority, and then determines related parameters of the channel access, as shown in the following table. The procedure is as follows:

Step 1 (Step 1): Setting a counter N = Nint, where Nint is a random number evenly distributed between 0 and CWp, and then performing Step 4.

Step 2: If N > 0, the terminal decrements the counter by 1, that is, N = N - 1.

Step 3: Performing detection on a sensing slot with a length of Tsl (where Tsl represents an LBT sensing slot, with a length of 9 µs) for the channel. If the sensing slot is idle, performing Step 4; otherwise, performing Step 5.

Step 4: If N = 0, ending the channel access procedure; otherwise, performing Step 2.

Step 5: Performing detection in a time interval of Td (where Td = 16 + mp * 9 µs) for the channel, where a result of the time interval detection is either that at least one sensing slot is occupied or that all sensing slots are idle.

Step 6: If the channel sensing result is that all sensing slots are idle within the time Td, performing Step 4; otherwise, performing Step 5.

If the channel access procedure ends, the terminal determines a corresponding maximum channel occupancy time T_{mcot,p}, and then use the channel to transmit the service to be transmitted. The channel occupancy time (COT) of the terminal cannot exceed a maximum channel occupancy time T_{mcot,p} corresponding to its channel access priority. In addition, after obtaining the COT, the terminal may share the COT with other terminals, which is called COT sharing, to ensure that different users of the same system continuously occupy the system, preventing other systems from accessing halfway and occupying the channel. Channel access priority classes are shown in the following table:

| Channel access priority (p) | mₚ | CW_{min,p} | CW_{max,p} | T_{mcot,p} | Allowed values of CW_{P} |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

CW_{min,p} may be called a minimum contention window size, CW_{max,p} may be called a maximum contention window size, T_{mcot,p} may be called a maximum channel occupancy time, and CWₚ may be called a set of permitted contention window sizes.

### (2) Type 2 channel access method:

After obtaining a COT shared by another terminal, the terminal may evaluate the channel according to the Type2 method before transmission. The Type2 channel access method is based on a fixed channel sensing length, which includes a total of three methods:
1) Type 2A channel access:
   The terminal senses the channel for at least 25 µs before starting transmission, and performs transmission after the channel sensing is successful.
2) Type 2B channel access:
   The terminal senses the channel for 16 µs before starting transmission, and performs transmission after the channel sensing is successful.
3) Type 2C channel access:
   The terminal directly performs transmission without channel sensing. A gap between a start moment of the transmission and an end moment of the previous transmission is less than or equal to 16 µs, and a length of the transmission does not exceed 584 µs.

It should be noted that in the following description, "Type 1 channel access" refers to the Type 1 channel access method, which is represented by Typel LBT; and "Type 2 channel access" refers to the Type 2 channel access method, which is represented by Type2 LBT.

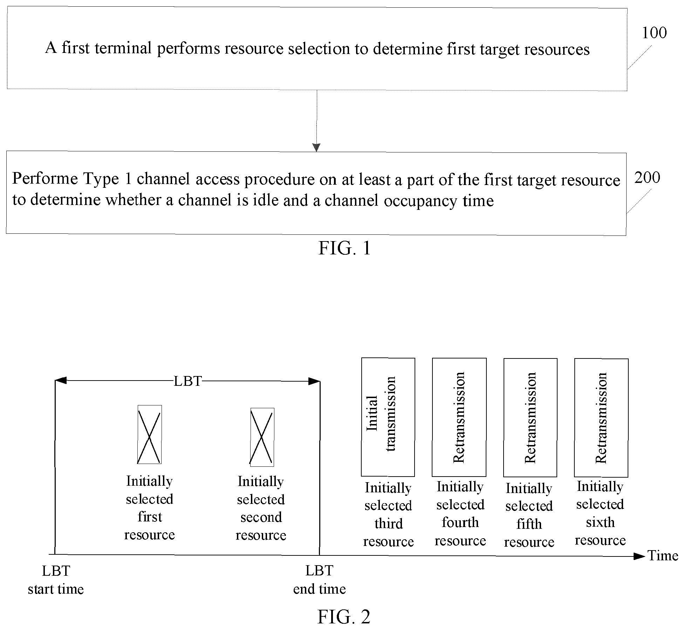

As shown in FIG. 1, an optional embodiment of the present disclosure provides a channel access processing method applied to sidelink. The method is applied to a first terminal and includes the following steps.

Step 100: The first terminal performs resource selection to determine a first target resource.

It should be noted that the resource selection performed by the first terminal includes but is not limited to: a processing procedure of contiguous resources, determination of the number of resource selections, a processing procedure of non-contiguous resources, and the like; and the first target resource enhanced by the resource selection is determined through the resource selection at the first terminal side.

Step 200: A Type 1 channel access procedure is performed on at least a part of the first target resource to determine whether a channel is idle and a channel occupancy time COT.

The Type 1 represents a channel access method that uses a contention window (CW) of a variable size to perform random backoff and that determines the size of the CW according to a channel access priority class.

In this embodiment, the COT determined in Step 200 is not necessarily of the first terminal, but may also be shared with a second terminal. The COT herein only represents the COT determined by the first terminal. The purpose of determining whether the channel is idle in Step 200 is to avoid mutual interference caused by simultaneous transmission from different systems as much as possible. The present disclosure completes the channel access processing procedure for sidelink.

Optionally, Step 100 includes: Step 110: determining a time for triggering the resource selection; Step 120: determining a resource selection window based on the time for triggering the resource selection; and Step 130: determining the first target resource based on the resource selection window, where a first time interval T1 between a start time of the resource selection window and the time for triggering the resource selection is determined by a transmitting processing delay, a resource selection processing delay of the first terminal, and minimum duration of performing the Type 1 channel access procedure.

In this embodiment, before the first target resource are determined, limitations are imposed on a left edge (the start time of the resource selection window) of the resource selection window determined by the first terminal. When performing resource selection, the first terminal determines a time n for triggering the resource selection, and determines a time interval [n+T1, n+T2] as the resource selection window, where (n+T1) represents the left edge of the resource selection window, and (n+T2) represents the right edge of the resource selection window. It can be understood that the first terminal determines the first target resource within the range of [n+T1, n+T2] based on a sensing result.

Herein, the first time interval T1 is determined by the start time of the resource selection window and the time for triggering the resource selection. The determination of the first time interval T1 needs to consider at least one of the following factors: a transmitting processing delay T_{proc,1}, a resource selection processing delay T_{proc,1-A}, or minimum duration T_{minLBT} of performing the Type 1 channel access procedure. The minimum duration of performing the Type 1 channel access procedure is the minimum duration of the type1 LBT (to be) performed at this time. The resource selection processing delay T_{proc,1-A} is a parameter newly defined in the present disclosure. That is, the first terminal completes resource selection at (n+T_{proc,1-A}), and determines time-frequency positions of the resources.

It should be noted that the transmitting processing delay T_{proc,1} is parameter information determined in the process of sidelink resource selection, which is the same as the determining method in the related technical protocol and therefore is not explained herein.

Specifically, the first time interval T1 includes at least one of the following: the first time interval T1 being greater than or equal to zero; the first time interval T1 being less than or equal to the transmitting processing delay; the first time interval T1 being greater than the minimum duration; or the first time interval T1 being greater than a sum of the minimum duration and the resource selection processing delay.

In this embodiment, the first time interval T1 is expressed by the following formula: 0 ≤ T1; or T1 ≤ T_{proc,1}; or T1 > T_{minLBT}; or T1 > T_{minLBT} + T_{proc,1-A}.

It should be noted that the first time interval T1 further includes at least one of the following: T1 ≥ T_{minLBT}; or T1 ≥ T_{minLBT} + T_{proc,1-A}.

Specifically, in this case, an end time of the resource selection window includes at least one of the following: the end time of the resource selection window being within a range less than a packet delay budget (PDB); or the end time of the resource selection window being within a range of a first preset time after the resource selection is triggered.

It should be noted that the first preset time is a resource selection time limit for the terminal to implement the selection.

It should also be noted that in this embodiment of the present disclosure, the following may further be included: determining a right edge (n+T2) parameter of the resource selection window, where a value of T2 is related to a defined minimum value T2ₘᵢₙ allowed by T2 and a remaining packet delay budget Remaining PDB.

In the present disclosure, the determination of the first time interval T1 facilitates resource selection enhancement in sidelink resource selection.

Optionally, the number of the first target resources is N+M, where
N is the number of transmission resources required for transmission of a transport block TB, and M is the number of additional candidate transmission resources, N and M being integers greater than or equal to 1.

It should be noted that the M candidate transmission resources are added to prevent the transmission resources of the first terminal from being invalidated.

Specifically, a value of M includes: a value configured by a higher layer; or a value that is predefined, pre-configured, or configured by a protocol; or a value determined based on first parameter information.

Specifically, the first parameter information includes at least one of the following: a channel access priority; a priority of data; a channel busy ratio (CBR); a value of N; duration during which the first terminal previously performs the Type 1 channel access procedure, that is, duration of previous Type1 LBT of the first terminal; a channel occupancy ratio (CR); or a maximum channel occupancy ratio (CRₗᵢₘᵢₜ).

In this embodiment, the present disclosure takes a constant LBT time into account. If the channel is busy, the duration of Type1 LBT may be relatively long, causing an end time of the LBT to be later than a time of some transmission resources. In this case, expired transmission resources become invalidated after the LBT ends. If no additional candidate resources are added, the number of available transmissions may be reduced due to the LBT. Therefore, when the first terminal performs the resource selection, the number of selected resources is N+M, where N is the number of transmission resources required for transmission of a transport block (TB), and M is the number of additional candidate transmission resources. M is a value that is configured by the higher layer or pre-configured or is determined based on the first parameter information.

It should be noted that N is the number of resources configured or pre-configured by the current resource selection for transmission. For example, one TB requires 32 transmissions, and the current resource selection corresponds to only 4 of them, that is, N = 4 instead of 32.

As shown in FIG. 2, in a first specific embodiment, it is assumed that the number of transmissions corresponding to one TB of the first terminal is 4. However, considering that the duration of Type1 LBT is uncertain, some resources may be unavailable. Therefore, the terminal needs to select M additional candidate resources during the resource selection. Assuming that M = 2, the terminal needs to select a total of six resources that may be used for transmission. After the resource selection, the terminal performs Type1 LBT. The end time of LBT is after an initially selected second candidate resource, and therefore the first two initially selected resources become invalid and fails to be used for transmission. Then the terminal uses an initially selected third resource as a real initial transmission resource, uses an initially selected fourth resource as a real first retransmission resource, and so on.

Optionally, the first target resource determined in Step 100 includes at least one of the following: resources that are contiguous in time domain among available resources; resources that are contiguous in time domain with resources reserved by other terminals among available resources; resources that are within a same maximum channel occupancy time among available resources; or resources that are within a same maximum channel occupancy time with resources reserved by other terminals among available resources.

In this embodiment, when performing the resource selection, the first terminal determines the corresponding channel access priority based on the priority of data, and then determines the corresponding maximum channel occupancy time COT. In order to ensure the maximum utilization of the COT determined by the Type1 LBT and to ensure the continuous occupancy of the channel by sidelink, enhancement is performed based on random resource selection, which may include at least one of the following:
Solution 1-1: The terminal preferentially selects resources that are contiguous in time domain from available resources (mainly for blind retransmission, without considering a hybrid automatic repeat request (HARQ) feedback time).

Solution 1-2: The terminal preferentially selects resources that are contiguous in time domain with resources reserved by other terminals from available resources.

Solution 1-3: Transmission resources selected by the terminal from available resources are within a same maximum channel occupancy time.

Solution 1-4: Transmission resources selected by the terminal from available resources and resources reserved by other terminals are within a same maximum channel occupancy time.

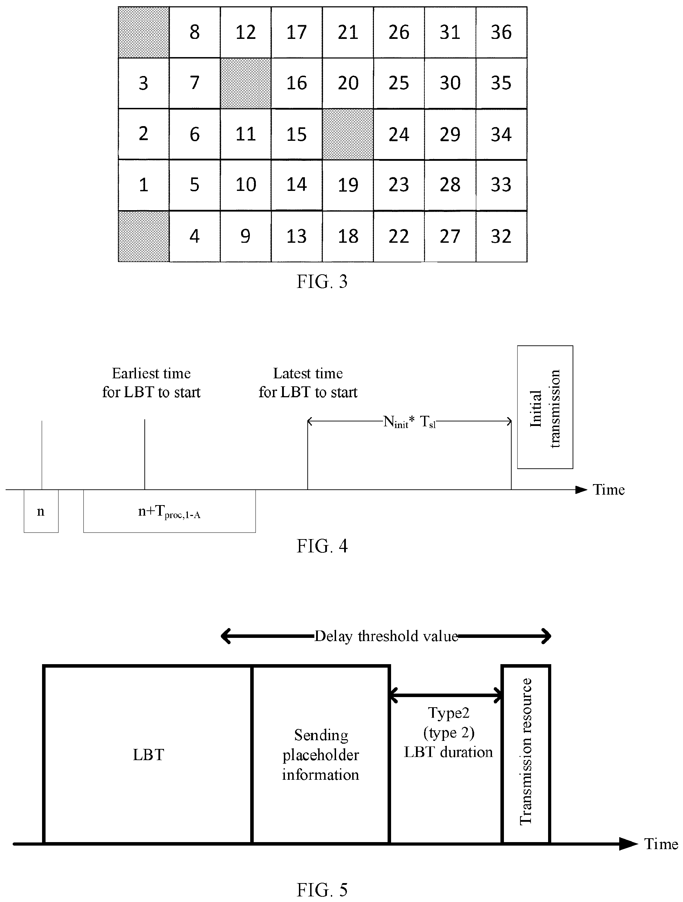

As shown in FIG. 3, in a second specific embodiment, it is assumed that transmission of the first terminal needs to occupy one sub-channel and requires four transmissions, and sequence numbers are indexes of the available resources. According to the resource selection method described above, the terminal performs random resource selection, which may be {1, 6, 17, 21} or {1, 5, 10, 14} or the like.

In Solution 1-1, that is, selecting resources that are contiguous in time domain, {1, 6, 17, 21} does not meet the requirement, and the first terminal may select resources that are contiguous in time domain, such as {1, 5, 10, 14} or {4, 9, 13, 18}.

In Solution 1-2, that is, selecting resources that are contiguous in time with resources reserved by other terminals, for candidate resources {5, 14, 19, 23} and candidate resources {5, 19, 23, 28}, the terminal will give priority to {5, 14, 19, 23}, because it can ensure that the transmission of the terminal and the transmission of other terminals are contiguous in time domain, ensuring the continuous occupancy of the channel by the sidelink system.

In Solution 1-3, assuming that the COT time is 4 slots, for resources {5, 10, 14, 19} and resources {5, 14, 23, 33}, the terminal will give priority to {5, 10, 14, 19}, because the corresponding resources are within one COT time. For the transmission within one COT, the terminal only needs to perform the Type2 channel access procedure, which is relatively simpler and makes the channel access procedure faster.

In Solution 1-4, likewise, assuming that the COT time is 5 slots, for resources {10, 14, 28, 33} and resources {10, 14, 23, 28}, the terminal will give priority to the latter, because the latter can ensure that the occupancy of the system by sidelink is contiguous in time and within one COT time.

In conclusion, the present disclosure ensures the maximum utilization of the COT determined by the Type1 LBT, and enhancement is performed based on random resource selection, thereby ensuring the continuous occupancy of the channel by sidelink.

In the invention, the first target resource determined in Step 100 includes: resources that meet a second condition and are non-contiguous in time domain among available resources, where the second condition is that a second time interval between two consecutive transmissions is greater than a first preset threshold value, and the first preset threshold value is a value configured by a higher layer, or a value predefined, pre-configured, or configured by a protocol.

Herein, the first preset threshold value is preferably the minimum duration of the Type 1 channel access procedure.

In this embodiment, it is assumed that the available resources are non-contiguous in time domain, one transmission is within the shared COT, but the subsequent transmission is not within the COT time, that is, the Type1 LBT is still required before the subsequent transmission. The solution in this case is as follows: ensuring that an interval between the two transmissions is greater than a first preset threshold value, so as to ensure that the terminal has time to perform the Type1 LBT, where the first preset threshold value may be the minimum time of performing the Type1 LBT, that is, Nᵢₙᵢₜ * Tₛₗ, where Tₛₗ represents an LBT sensing slot, with a length of 9 µs; and Nᵢₙᵢₜ is a random number evenly distributed between 0 and CWₚ. The present disclosure can ensure that sufficient LBT time can be reserved if the available resources are not contiguous, thereby achieving enhancement of the first target resource.

It should be noted that the available resources described above are used to indicate that the remaining resources are excluded from the resource selection window based on the sensing result.

Optionally, Step 200 of performing a Type 1 channel access procedure on at least a part of the first target resource includes: Step 210: determining a first candidate time for starting the Type 1 channel access procedure, and/or a second candidate time for starting the Type 1 channel access procedure; Step 220: determining, based on the first candidate time and/or the second candidate time, an LBT start time for performing the Type 1 channel access procedure; and Step 230: performing the Type 1 channel access procedure on the part of the first target resource based on the LBT start time.

In this embodiment, the time at which the first terminal starts LBT, that is, the LBT start time, can be determined by determining the first candidate time and/or the second candidate time, to ensure that different users of the same system continuously occupy the channel and prevent other systems from accessing and occupying the channel halfway.

Specifically, Step 220 includes: Step 221: in a case that the second candidate time is later than or the same as the first candidate time, determining that the LBT start time is later than or the same as the first candidate time and earlier than or the same as the second candidate time.

In this embodiment, the time at which the first terminal actually starts LBT (that is, the LBT start time) is further determined by determining the first candidate time and the second candidate time. In Step 221, it is determined that the LBT start time is between the first candidate time and the second candidate time, that is, the first candidate time ≤ the LBT start time ≤ the second candidate time. Specifically, the LBT start time may be the earliest LBT time, or the latest LBT time, or may be between the two, which may depend on the implementation of the first terminal.

Alternatively, Step 220 includes Step 222: in a case that the second candidate time is earlier than the first candidate time, determining that the LBT start time is later than or the same as the first candidate time.

In this embodiment, when the second candidate time is earlier than the first candidate time, only the first candidate time is valid, and the first candidate time is a time at which the time-frequency positions of the resources have been determined, that is, the first terminal can perform LBT only after determining the time-frequency positions of the resources.

It should be noted that Step 220 includes: Step 223: determining that the LBT start time is later than or the same as the first candidate time.

In this embodiment, only the first candidate time is determined to ensure that the LBT start time that is later than or the same as the first candidate time is valid, and the first candidate time is a time at which the time-frequency positions of the resources have been determined, that is, the first terminal can perform LBT only after determining the time-frequency positions of the resources.

Optionally, the determining a first candidate time includes: determining a first start time for triggering the first terminal to perform the resource selection, and a processing delay of the first terminal performing the resource selection; and determining the first candidate time using a first formula: A1 = B1 + C1, where A1 represents the first candidate time, B1 represents the first start time, and C1 represents the processing delay of the first terminal performing the resource selection.

It should be noted that C1 may also be represented as the transmitting processing delay of the first terminal.

In this embodiment, the first terminal determines, based on the first target resource, the first start time for performing the resource selection, that is, the time n for triggering the resource selection. In other words, at the time n, the sensing result is determined and transmitting processing starts to be performed. In the present disclosure, a processing delay T_{proc,1-A} for the first terminal to perform the resource selection is further determined (only the transmitting processing delay T_{proc,1} is defined in the related art, and T_{proc,1-A} here is used to indicate a total time of transmitting-related operations such as resource selection and transmitting processing). The resource selection is completed using the first formula: the first candidate time = n+T_{proc,1-A}, and further the time-frequency positions of the resources are determined.

Herein, the first candidate time is preferably the earliest time of LBT, which is similar to a time for determining the time-frequency positions of the resources.

Optionally, the determining a second candidate time includes: determining, based on the first target resource, a time at which a resource corresponding to the Type 1 channel access procedure among the first target resource is located, and a first duration for performing the Type 1 channel access procedure, where the first duration here is used to indicate the minimum duration of the Typel LBT; and determining the second candidate time according to a second formula: A2 = B2 - C2, where A2 represents the second candidate time, B2 represents the time at which the resource is located, C2 represents the first duration and where it should be noted that in the second formula, the second candidate time = T_{resource to be subjected to LBT} - the minimum value of the Type1 LBT duration, where T_{resource to be subjected to LBT} represents the time at which the resource is located, that is, a time domain position of the resource subjected to the Type1 LBT, and the minimum value of the Type1 LBT duration is Nᵢₙᵢₜ * Tₛₗ, where Nᵢₙᵢₜ and Tₛₗ are the same as described above; or determining duration required for a transport block TB of the first target resource, a latest time of a resource selection window for the first target resource, and the first duration; and determining the second candidate time according to a third formula: A2 = B3 - C2 - D1, where A2 represents the second candidate time, B2 represents the time at which the resource is located, C2 represents the first duration, B3 represents the latest time of the resource selection window, and D1 represents the duration required for the transport block TB.

It should be noted that B3 may also be the latest time allowed by the service transmission, that is, a service packet arrival time plus a service packet transmission delay.

It should be noted that, in the third formula, the second candidate time = the right edge of the resource selection window (or the latest time allowed by the service transmission) - the duration required for the TB - the minimum value of the Type1 LBT duration.

It should also be noted that the second candidate time may be understood as the latest time for LBT to start.

It should also be noted that the second candidate time described above may be before the first candidate time, that is, (T_{resource to be subjected to LBT} - the minimum value of the Type1 LBT duration) < (n+T_{proc,1-A}), and in this case only the earliest time is valid, that is, (n+T_{proc,1-A}) is valid because the first terminal can perform LBT only after determining the time-frequency positions of the resources.

As shown in FIG. 4, in a third specific embodiment, the first terminal starts to perform the resource selection and other transmitting processing at the time n. Assuming that the terminal completes the resource selection at a time (n+T_{proc,1-A}) and determines the positions of the selected resources. This time is the earliest time at which the first terminal can perform LBT. The latest time for LBT to start is (T_{initial transmission} - Nᵢₙᵢₜ*Tₛₗ). This case assumes that even if each Tₛₗ is in an idle state, it is still required that duration of channel sensing is Nᵢₙᵢₜ*Tₛₗ. Therefore, the latest time for LBT to start is (T_{initial transmission} - Nᵢₙᵢₜ * Tₛₗ). If it is later than this time, the initial transmission resource will definitely not be available. Actually, the time at which the first terminal starts LBT may be between the earliest time point and the latest time point.

Optionally, after Step 200 of performing the Type 1 channel access procedure, the method further includes: Step 240: determining an end time of the end of performing the Type 1 channel access procedure and a first time of a resource to be transmitted that is closest to the end time; and Step 250: transmitting the resource to be transmitted based on the end time and the first time.

In the present disclosure, the end time and the first time are determined, so as to determine whether placeholder information is transmitted between the end time and the first time, thereby preventing channel resources from being always reserved due to the terminal not receiving scheduling from the second terminal, and improving the efficiency of channel use.

Optionally, Step 250 includes: Step 251: if the end time is the same as the first time or an interval between the end time and the first time is less than or equal to a second preset threshold value, directly transmitting the resource to be transmitted; or Step 252: if the end time is before the first time, determining a first target interval between the end time and the first time; and Step 253: determining, based on the first target interval, to send the resource to be transmitted.

In this embodiment, if the LBT by the first terminal (which may be Type1 LBT or Type2 LBT) ends, the end time of the end of performing the Type 1 channel access procedure is determined, that is, the channel is idle during X1, and a first time M1 of the resource to be transmitted that is closest to the end of LBT is determined. Behavior of the first terminal before transmitting at M1 may include at least one of the following:

In Step 251, if the end position of the LBT is exactly at the first time M1 of the resource to be transmitted, or the interval to M1 is less than or equal to the second preset threshold value, the first terminal directly transmits the resource to be transmitted. The purpose of the second preset threshold value is to determine whether the placeholder information needs to be transmitted during the interval between M1 and the end position of the LBT. For example, if the interval between M1 and the end position of the LBT is less than 16 µs, the resource to be transmitted can be transmitted directly. Herein, the second preset threshold value is a value configured by a higher layer, or a value predefined, pre-configured, or configured by a protocol.

In Step 252 and Step 253, if there is the first target interval between M1 and the end time of the LBT, it is determined to send the resource to be transmitted based on the first target interval.

Specifically, before Step 253, the method includes: if the first target interval is greater than or equal to a first time threshold value, determining to send first placeholder information before the first time, where in the first manner, the placeholder information is transmitted only when it is ensured that the interval is large enough, and if the interval is small, the placeholder information does not need to be transmitted; or if the first target interval is greater than (or greater than or equal to) a first time threshold value, determining to send first placeholder information to occupy the channel before the first time; or if the first target interval is less than or equal to (or less than) a first time threshold value, skipping transmitting placeholder information; or if the first target interval is less than or equal to a second time threshold value, determining to send the first placeholder information before the first time, where in the second manner, it is ensured that a time for transmitting the placeholder information cannot be too long, otherwise it will be unfair to other systems; or if the interval between the two is less than (or less than or equal to) a second time threshold value, determining to send first placeholder information to occupy the channel before the first time; or if the interval between the two is greater than or equal to (or greater than) a second time threshold value, skipping transmitting placeholder information, and performing Type2 channel access before transmitting; or if the first target interval is between the second time threshold value and the first time threshold value, determining to send the first placeholder information before the first time, where the third manner is a combination of the second manner and the first manner, in which case the second time threshold value is less than the first time threshold value; duration of transmitting the first placeholder information is less than or equal to a third preset threshold value, and the first time threshold value, the second time threshold value, and the third preset threshold value are all values configured by a higher layer, or values predefined, pre-configured, or configured by a protocol.

It should be noted that the duration for transmitting the first placeholder information may be configured by a higher layer or pre-configured. In addition, the first time threshold value may be related to the time required for the Type2 LBT, and the duration for transmitting the first placeholder information may be related to the position of the resource to be transmitted by the first terminal and/or the time required for the Type2 LBT and/or the service priority and/or the channel access priority.

It should also be noted that the first threshold value or second threshold value described above is only for illustration of several different cases. In practice, the first threshold value and the second threshold value may not be defined, which only means that the placeholder information is allowed to be transmitted before transmission, and the transmitting duration of the placeholder information needs to be less than or equal to a (pre-)configured threshold value. Herein, the (pre-)configured threshold value corresponding to the duration for transmitting the placeholder information may be related to the service priority or the channel access priority.

As shown in FIG. 5, in a fourth specific embodiment, the first terminal performs physical sidelink control channel (Physical Sidelink Control Channel, PSCCH)/physical sidelink shared channel (Physical Sidelink Shared Channel, PSSCH) transmission after completing the Type1 LBT. If the interval with the subsequent transmission is less than a configured delay threshold value and greater than the Type2 LBT duration, the terminal may send the placeholder information for a period of time to ensure that the interval to the next transmission meets the Type2 LBT duration, thereby preventing access by other systems during this period. The reason for defining the delay threshold value is to prevent the terminal from transmitting the placeholder information for too long, which is unfair to other systems. That is, the placeholder information can be transmitted only under specific conditions, and the duration of the placeholder information may not be too long.

The method further includes: Step 300: transmitting, by the first terminal, first control information to a second terminal, where the first control information includes information related to the COT determined by the first terminal.

It should be noted that, Step 100 and Step 200 are the process in which the first terminal performs the Type1 LBT to determine the COT based on the first target resource, and this process is only related to the first terminal, while Step 100 to Step 300 are the processing procedure in which the first terminal performs the Type1 LBT to determine the COT based on the first target resource, and shares the related information of the COT determined by the first terminal to the second terminal.

It can be understood that, COT sharing is not a required feature and the COT may not be shared with other user equipment (user equipment, UE), that is, the COT is only used by the first terminal (Step 100 and Step 200); or the COT sharing may be implemented as the procedure of "LBT by the first terminal + sharing of the COT determined by the first terminal + the second terminal receiving the COT" (Step 100 to Step 300).

In Step 300, after performing the Type1 LBT, the first terminal may send information related to the COT determined by the first terminal to the second terminal, where the first control information includes at least one of the following: a time-frequency position of the resource to be transmitted by the first terminal, LBT subband information, an ID of the first terminal, an ID of a terminal expected to receive the shared COT information, a priority of the service to be transmitted by the first terminal, COT placeholder information determined by the first terminal, channel busy ratio (Channel Busy Ratio, CBR) information measured by the first terminal, a time-frequency range of transmission resources recommended for other terminals (similar to coordination processing between UEs), a time-frequency range of transmission resources not recommended for other terminals, the channel access priority, or the like.

The scenario of Step 300 may include at least one of the following: unicast, connected groupcast, connectionless groupcast, or broadcast.

Optionally, Step 300 includes: transmitting, by the first terminal, the first control information to the second terminal when a first condition is met, where the first condition meets at least one of the following: that a remaining duration of the COT is greater than or equal to a pre-configured first threshold; that duration of performing the Type 1 channel access procedure is less than or equal to a pre-configured second threshold; that the remaining number of transmissions of the first terminal is less than or equal to a pre-configured third threshold; that request information transmitted by the second terminal to the first terminal is received by the first terminal, where the request information is used to indicate that reception of the first control information transmitted by the first terminal is expected; that the first terminal has a service to be transmitted to the second terminal; that a higher-layer configuration or pre-configuration supports COT sharing; that the first terminal supports COT sharing; that a value of a service priority of the first terminal is less than (or less than or equal to) a preset service priority threshold value; that a value of a channel access priority of the first terminal is less than (or less than or equal to) a channel access priority threshold value; or that a time-frequency resource occupancy percentage of the first terminal is less than (or less than or equal to) a time-frequency resource percentage value within the COT that is configured or pre-configured by a higher layer.

It should be noted that the pre-configured first threshold, the pre-configured second threshold, the pre-configured third threshold, the preset service priority threshold value, and the time-frequency resource percentage value within the COT are all values configured by a higher layer or pre-configured by a protocol, and the first threshold and the second threshold may range from 3 ms to 5 ms; the number of times for the third threshold may be 1, 2, 3, 4, or the like, which is not limited herein; the preset service priority threshold value may range from 1 to 8; and the time-frequency resource percentage value within the COT may be 20% or the like.

Optionally, before Step 300, the method further includes: Step 310: determining a maximum decoding processing delay.

In this embodiment, before Step 300, the first terminal determines the maximum decoding processing delay from a preset protocol, and the maximum decoding processing delay is greater than or equal to a decoding processing delay of the second terminal, thereby ensuring the continuous occupancy of the channel and preventing access by other systems.

Optionally, the first terminal is capable of performing at least one of the following within the maximum decoding processing delay: performing, by the first terminal, service transmission to the second terminal; or transmitting, by the first terminal, second placeholder information to the second terminal, where duration of the second placeholder information is less than or equal to a fourth preset threshold value.

It should be noted that the fourth preset threshold value is related to the service priority or the channel access priority.

The first terminal performs continuous transmitting to occupy the channel within the maximum decoding processing delay, where the continuous transmitting includes at least one of the following: performing PSCCH (physical sidelink control channel)/PSSCH (physical sidelink shared channel) transmission, and transmitting the second placeholder information. Duration for transmitting the second placeholder information is T_{proc,0} - T_{PSCCH/PSSCH}, where T_{proc,0} is the maximum decoding processing delay, and T_{PSCCH/PSSCH} is a time during which the first terminal transmits the PSCCH/PSSCH, where TPSCCH/PSSCH may be 0.

It should be noted that after determining the COT, the first terminal shares the COT with the second terminal. However, considering the decoding processing time of the second terminal, additional processing is required to ensure the continuous occupancy of the channel and prevent access by other systems. In addition, the first terminal may continuously send the PSCCH/PSSCH, during which the channel has been occupied, and therefore T_{PSCCH/PSSCH} is subtracted.

Optionally, after the COT is determined in Step 200, the method further includes: Step 410: determining a retransmission time of the first terminal; and Step 420: if the retransmission time is within the range of the COT, performing a Type 2 channel access procedure for retransmission of at least the part of the first target resource; or Step 430: if the retransmission time is outside the range of the COT, performing the Type 1 channel access procedure for retransmission of at least the part of the first target resource.

The Type 2 indicates that only channel access based on LBT with a determined interval is performed.

In this embodiment, if the subsequent transmission of the first terminal, that is, the retransmission time of the first terminal is within the effective range of COT, the type of Type2 LBT is determined based on the transmission position and the required time, and the transmitting process is performed after it is determined that the channel is idle. The COT described above may be a COT determined by the first terminal, or a received COT shared by the second terminal. The COT here only represents the COT determined by the first terminal. If the retransmission time of the first terminal is outside the effective range of the COT, the channel is sensed again based on Type1 LBT before the subsequent transmission, that is, the Type 1 channel access procedure is performed for retransmission of at least the part of the first target resource.

Optionally, in Step 200, in a case that second control information transmitted by a second terminal to the first terminal is received during performing the Type 1 channel access procedure on at least the part of the first target resource, the method further includes: Step 500: when a third condition is met, determining to end the Type 1 channel access procedure, and based on the second control information, performing a Type 2 channel access procedure on at least the part of the first target resource, where the second control information includes information related to a COT determined by the second terminal. The second type indicates that only channel access based on LBT with a determined interval is performed.

It should be noted that the COT-related information determined by the second terminal is similar to the COT-related information determined by the first terminal, and is not described in detail herein.

In some embodiments, the method further includes: directly determining to end the Type 1 channel access procedure, and performing a Type 2 channel access procedure on at least the part of the first target resource.

In this embodiment, if the first terminal receives, during the execution of the Type1 LBT, the related information about the COT shared by the second terminal, the first terminal can terminate the Type1 LBT and, based on the second control information, use the Type2 LBT for transmission during the remaining duration of the COT shared by the second terminal. That is, the COT shared by other terminals may be used preferentially. This is also the process of "determining to end the Type 1 channel access procedure, and performing a Type 2 channel access procedure on at least the part of the first target resource" specified in Step 500.

In some embodiments, the priority of the COT determined by the first terminal is higher than the COT shared by the second terminal, that is, the COT determined by the first terminal is used preferentially.

Specifically, the third condition includes at least one of the following:
that a service priority of the first terminal is lower than or equal to a service priority of the second terminal;
that a channel access priority of the first terminal is lower than (or equal to) a channel access priority of the second terminal; or
that a remaining duration of the COT of the second terminal is greater than (or equal to) a third time threshold value, where
the third time threshold value is a value configured by a higher layer, or a value predefined, pre-configured, or configured by a protocol.

The Type 2 channel access indicates that only channel access based on LBT with a determined interval is performed.

In this embodiment, the third condition determined by the first terminal based on the related information of the terminal (the service priority, the channel access priority, or the like) and/or the received second control information (including information related to the COT determined by the second terminal, that is, the service priority, the channel access priority, the remaining COT, or the like) includes at least one of the following:
if the service priority of the first terminal is higher than (or equal to) the service priority of the terminal that shares the COT, the Type1 LBT by the first terminal is continued; otherwise, the Type1 LBT by the terminal may be terminated, and the COT shared by the second terminal may be used to perform Type2 LBT for transmission;
if the channel access priority of the first terminal is higher than (or equal to) the channel access priority of the terminal that shares the COT, the Type1 LBT by the first terminal is continued; otherwise, the Type1 LBT by the terminal may be terminated, and the COT shared by the second terminal may be used to perform Type2 LBT for transmission; or
if the remaining COT of the terminal that shares the COT is less than (or equal to) the third time threshold value, the Type1 LBT by the first terminal is continued; otherwise, the Type1 LBT by the terminal may be terminated, and the COT shared by the second terminal may be used to perform Type2 LBT for transmission, where the third time threshold value is a value configured by a higher layer, or a value predefined, pre-configured, or configured by a protocol.

Step 500 and the third condition of the present disclosure specify how the first terminal should handle the situation when the COT shared by another terminal (the second terminal) is received during the Type1 LBT, thereby improving the processing mechanism of the first terminal.

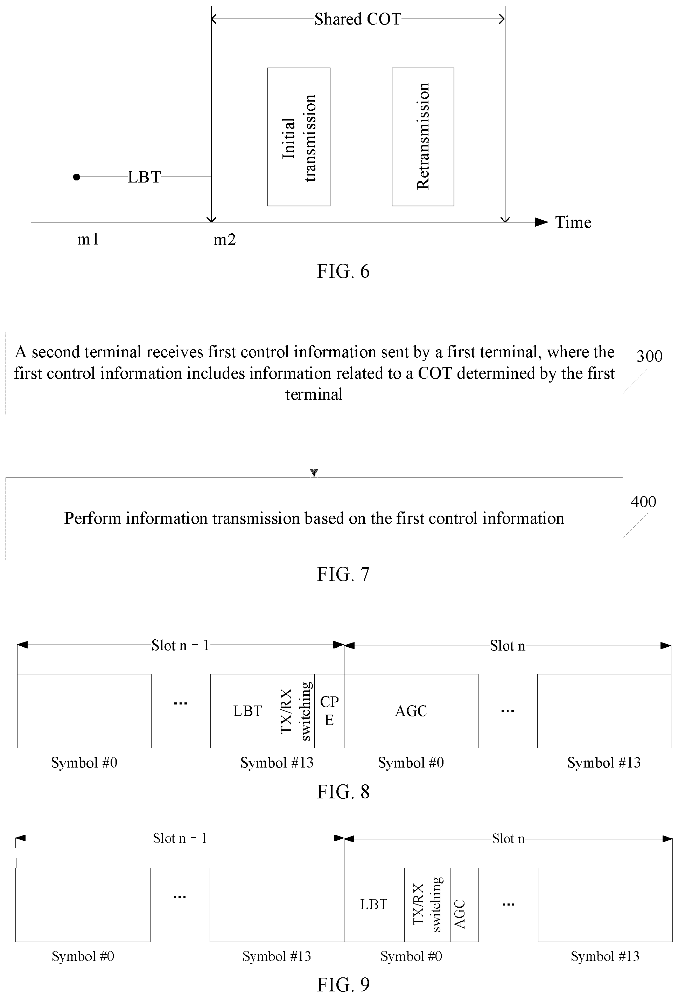

FIG. 6 shows a priority relationship between the Type1 LBT and the Type2 LBT. In a fifth specific embodiment, the first terminal performs Type1 LBT for initial transmission, and a start time is m1. During the execution process, at a time m2 shown in FIG. 6, the COT shared by the second terminal is received, and initial transmission and retransmission resources of the subsequent transmission are within the COT time period shared by the second terminal. In this case, the terminal may terminate the Type1 LBT. Because the initial and retransmission resources belong to the shared COT of the second terminal, the first terminal may perform the Type2 LBT before transmission, so that the terminal can access the channel faster.

In conclusion, the first terminal of the present disclosure can implement the resource selection, perform the Type1 LBT, determine the COT, perform enhancement before the initial transmission and the initial transmission, share the COT, perform enhancement after sharing the COT, and perform LBT for the retransmission and the retransmission. The present disclosure improves the channel access processing procedure for sidelink, and defines specific actions of the terminal to perform channel access. The present disclosure further ensures the continuous occupancy by sidelink during channel access, thereby reducing a probability of transmission failure caused by the access of other systems.

As shown in FIG. 7, an embodiment of the present disclosure further provides a channel access processing method applied to sidelink. The method is applied to a second terminal and includes the following steps.

Step 400: The second terminal receives first control information transmitted by a first terminal, where the first control information includes information related to a COT determined by the first terminal.

The information related to the COT determined by the first terminal is the same as the information described above, and is not described in detail herein.

Step 500: Performing information transmission based on the first control information.

In this embodiment, after the second terminal receives the information related to the COT determined by the first terminal, it may have some impact on its resource selection process or transmitting processing. Therefore, through Step 400 and Step 500, the processing procedure of the second terminal is further improved to maintain the continuous occupancy of the channel by the sidelink system as much as possible.

Specifically, the resource selection processing procedure of the second terminal may be improved in the following two manners: Manner 1 is that the terminal determines a resource selection window based on the received COT. A specific determining method may be taking the intersection of the COT and a resource selection window determined by the terminal as the resource selection window finally used. Manner 2 is that the terminal determines a final available resource set (or updates an available resource set) based on the received COT. A specific method may be taking all available resources of the available resource set determined by the terminal within the COT time period as a first available resource set. The second terminal first selects resources from the first available resource set. If the transmission requirements cannot be met from the first available resource set, the terminal falls back to select resources from the complete available resource set determined by the terminal.

Optionally, in Step 400 and in a case that the second terminal has determined a second target resource, Step 500 includes:
Step 510: determining a remaining duration of the COT based on the first control information; and
Step 520: if a time for transmitting the second target resource determined by the second terminal on the first terminal is within the remaining duration of the COT, performing, by the second terminal, a Type 2 channel access procedure for the information transmission.

In this embodiment, in a case that the second terminal has determined the second target resource, only the impact of the received COT on the transmitting is considered. If the transmission of the second terminal is within the remaining duration of the received COT (Remaining COT), the second terminal performs a Type2 channel access procedure, which is relatively simpler and makes the channel access procedure faster.

Specifically, a start time of the second terminal performing the Type 2 channel access procedure is a previous time unit of a time unit at which the second target resource is located.

It should be noted that the LBT is performed in the previous time unit, and a time for transmit/receive switching is ensured after the LBT. Placeholder information may further be transmitted after the transmit/receive switching time. It is not necessary to send the placeholder information. For example, if the transmit/receive switching (TX/RX switching) is completed exactly at the right edge of the previous slot, the second terminal can directly perform the transmission in the current time unit. The time unit may be a slot, a set of consecutive symbols, or the like. Particularly, the start time of the second terminal performing the Type 2 channel access procedure may be on the last symbol of the previous time unit.

As shown in FIG. 8, it should be noted that CPE in FIG. 8 refers to a cyclic prefix (CP) extension, which may be understood as a manner of transmitting the placeholder information. In a sixth specific embodiment, for example, the time unit is a slot, and each slot includes 14 symbols. Assuming that a current subcarrier spacing is 15 kHz, a length of one symbol is 71.4 µs. The terminal performs PSCCH/PSSCH transmission in a slot n and can perform Type2-A LBT. The terminal starts the LBT at a time point of a symbol #13 of the previous slot. The selection of the start time needs to consider duration of the LBT and the transmit/receive switching (TX/RX switching) time to ensure that the LBT and the transmit/receive switching are completed before the transmitting slot n.

Manner 1: After the transmit/receive switching is completed, the terminal can send placeholder information to occupy the channel, thereby ensuring that the placeholder information and the actual transmission are continuous in time.

Manner 2: After the transmit/receive switching is completed, if an interval to the next slot is greater than a specific threshold value, the terminal can send placeholder information to occupy the channel, thereby ensuring that the placeholder information and the actual transmission are continuous in time.

Herein, the determined time for the Type2 LBT is the start time of the second terminal performing the Type 2 channel access procedure: the last symbol of the previous slot.

Alternatively, a start time of the second terminal performing the Type 2 channel access procedure is a time unit at which the second target resource is located.

In this embodiment, the start time of the second terminal performing the Type 2 channel access procedure is the time unit at which the second target resource is located. That is, at the transmitting time, the terminal performs LBT in a time unit (which may be understood as a slot) at which a resource to be subjected to LBT is located, reserves the transmit/receive switching time before transmitting, and then repeatedly maps the remaining part of the symbol on which the LBT is located to all or part of content of a second symbol. Particularly, the start time of the LBT may be on the first symbol occupied by the current PSCCH/PSSCH transmission.

As shown in FIG. 9, in a seventh specific embodiment, the terminal performs PSCCH/PSSCH transmission and can perform Type2-A LBT in a slot n. The terminal starts to perform the Type2 LBT at the start position of the first symbol in the slot n, then reserves a transmit/receive switching time after the LBT is completed, and then repeatedly maps the remaining part of the first symbol to part of content of the second symbol.

Herein, the determined time for the Type2 LBT is the start time of the second terminal performing the Type 2 channel access procedure: the first symbol of the current slot.

It should be noted that the granularity of the resource in the present disclosure in frequency domain may be a sub-channel, an IRB, a non-contiguous physical resource, or the like.

Optionally, in Step 400 and in a case that the second terminal has not determined a second target resource, Step 500 includes:
determining a remaining duration of the COT based on the first control information;
performing, by the second terminal based on the remaining time of the COT, resource selection and determining the second target resource; and
performing the information transmission based on the second target resource and the first control information.

In this embodiment, in a case that the second terminal has not determined the second target resource, only the impact of the received COT on the enhancement of the resource selection is considered. Specifically, the enhancement solution is the same as Step 110 to Step 130 on the first terminal side. The difference is that the first terminal side determines the COT based on the access priority. The enhancement of the resource selection described herein is based on the received COT, which also includes selecting contiguous resources and being within the COT time.

Certainly, the solution of determining contiguous resources and non-contiguous resources among the available resources is also applicable to the second terminal side.

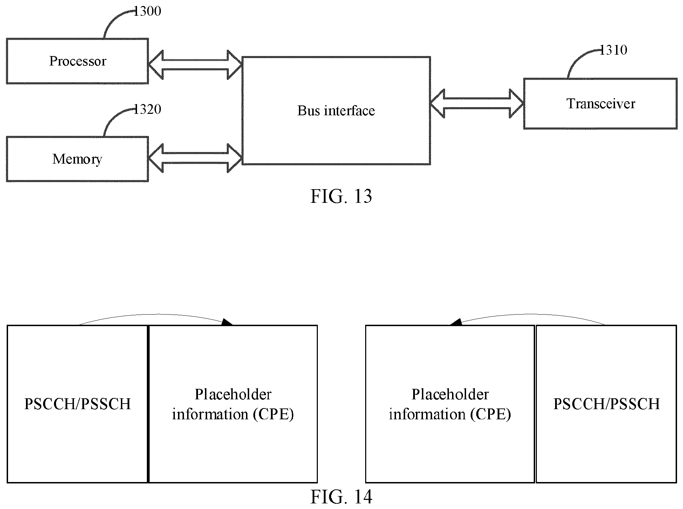

As shown in FIG. 14, regarding transmitting placeholder information, it should further be noted that: the first terminal and the second terminal may send the placeholder information before or after transmission, which may be CPE. A length of the transmitted placeholder information needs to be less than or equal to a second pre-configured threshold value, where the second pre-configured threshold value is related to the channel access priority or the service priority.

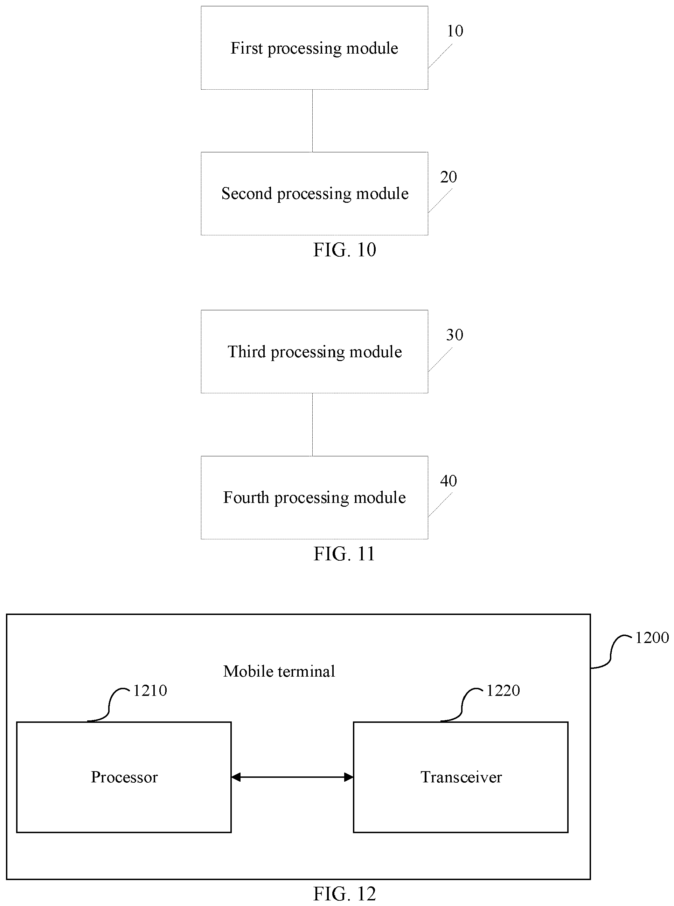

As shown in FIG. 10, an optional embodiment of the present disclosure further provides a channel access processing apparatus applied to sidelink. The apparatus includes:
a first processing module 10, configured for a first terminal to perform resource selection to determine a first target resource; and
a second processing module 20, configured to perform a Type 1 channel access procedure on at least a part of the first target resource to determine whether a channel is idle and a channel occupancy time COT.

Optionally, the apparatus further includes:
a first transmitting module, configured for the first terminal to send first control information to a second terminal, where
the first control information includes information related to the COT determined by the first terminal.

Optionally, the first processing module 10 includes:
a first determining submodule, configured to determine a time for triggering the resource selection;
a second determining submodule, configured to determine a resource selection window based on the time for triggering the resource selection; and
a third determining submodule, configured to determine the first target resource based on the resource selection window, where
a first time interval T1 between a start time of the resource selection window and the time for triggering the resource selection is determined by a transmitting processing delay, a resource selection processing delay of the first terminal, and minimum duration of performing the Type 1 channel access procedure.

It should be noted that the first time interval T1 includes at least one of the following:
the first time interval T1 being greater than or equal to zero;
the first time interval T1 being less than or equal to the transmitting processing delay;
the first time interval T1 being greater than the minimum duration; or
the first time interval T1 being greater than a sum of the minimum duration and the resource selection processing delay.

It should also be noted that the number of the first target resource is N+M resources, where
N is the number of transmission resources required for transmission of a transport block TB, and M is the number of additional candidate transmission resources, N and M being integers greater than or equal to 1.

It should also be noted that a value of M includes:
a value configured by a higher layer; or
a value that is predefined, pre-configured, or configured by a protocol; or
a value determined based on first parameter information.

It should also be noted that the first parameter information includes at least one of the following:
a channel access priority;
a priority of data;
a channel busy ratio;
a value of N;
duration during which the first terminal historically performs the Type 1 channel access procedure;
a channel occupancy ratio; or
a maximum channel occupancy ratio.

It should also be noted that the determined first target resource include at least one of the following:
resources that are contiguous in time domain among available resources;
resources that are contiguous in time domain with resources reserved by other terminals among available resources;
resources that are within a same maximum channel occupancy time among available resources; or
resources that are within a same maximum channel occupancy time with resources reserved by other terminals among available resources.

It should also be noted that the determined first target resource include:
resources that meet a second condition and are non-contiguous in time domain among available resources, where
the second condition is that a second time interval between two consecutive transmissions is greater than a first preset threshold value, and the first preset threshold value is a value configured by a higher layer, or a value predefined, pre-configured, or configured by a protocol.

Optionally, the second processing module 20 includes:
a fourth determining submodule, configured to determine a first candidate time for starting the Type 1 channel access procedure, and/or a second candidate time for starting the Type 1 channel access procedure;
a fifth determining submodule, configured to determine, based on the first candidate time and/or the second candidate time, an LBT start time for performing the Type 1 channel access procedure; and
a sixth determining submodule, configured to perform the Type 1 channel access procedure on the part of the first target resource based on the LBT start time.

Optionally, the fifth determining submodule includes:
a first determining unit, configured to: in a case that the second candidate time is later than or the same as the first candidate time, determine that the LBT start time is later than or the same as the first candidate time and earlier than or the same as the second candidate time; or
in a case that the second candidate time is earlier than the first candidate time, determine that the LBT start time is later than or the same as the first candidate time.

Optionally, the fourth determining submodule includes:
a second determining unit, configured to determine a first start time for triggering the first terminal to perform the resource selection, and a processing delay of the first terminal performing the resource selection; and
determine the first candidate time using a first formula: A1 = B1 + C1, where
A1 represents the first candidate time, B1 represents the first start time, and C1 represents the processing delay of the first terminal performing the resource selection.

Optionally, the fourth determining submodule includes:
a third determining unit, configured to determine, based on the first target resource, a time at which a resource corresponding to the Type 1 channel access procedure among the first target resources is located, and a first duration for performing the Type 1 channel access procedure; and
determine the second candidate time according to a second formula: A2 = B2 - C2; or
determine duration required for a transport block TB of the first target resource, a latest time of a resource selection window for the first target resource, and the first duration; and
determine the second candidate time according to a third formula: A2 = B3 - C2 - D1, where
A2 represents the second candidate time, B2 represents the time at which the resource is located, C2 represents the first duration, B3 represents the latest time of the resource selection window, and D1 represents the duration required for the transport block TB.

Optionally, the apparatus further includes:
a first determining module, configured to determine a retransmission time of the first terminal; and
a first execution module, configured to: if the retransmission time is within the range of the COT, perform a Type 2 channel access procedure for retransmission of at least the part of the first target resource; and
a second execution module, configured to: if the retransmission time is outside the range of the COT, perform the Type 1 channel access procedure for retransmission of at least the part of the first target resource.

Optionally, the apparatus further includes:
a second determining module, configured to determine an end time of the end of performing the Type 1 channel access procedure and a first time of a resource to be transmitted that is closest to the end time; and
a second transmitting module, configured to send the resource to be transmitted based on the end time and the first time.

Optionally, the second transmitting module includes:
a first transmitting unit, configured to: if the end time is the same as the first time or an interval between the end time and the first time is less than or equal to a second preset threshold value, directly send the resource to be transmitted; or
a fourth determining unit, configured to: if the end time is before the first time, determine a first target interval between the end time and the first time; and
a second transmitting unit, configured to determine, based on the first target interval, to send the resource to be transmitted.

Optionally, the second transmitting module further includes:
a third transmitting unit, configured to: if the first target interval is greater than or equal to a first time threshold value, determine to send first placeholder information before the first time; or
a fourth transmitting unit, configured to: if the first target interval is less than or equal to a second time threshold value, determine to send the first placeholder information before the first time; or
a fifth transmitting unit, configured to: if the first target interval is between the second time threshold value and the first time threshold value, determine to send the first placeholder information before the first time, where
duration of transmitting the first placeholder information is less than or equal to a third preset threshold value, and the first time threshold value, the second time threshold value, and the third preset threshold value are all values configured by a higher layer, or values predefined, pre-configured, or configured by a protocol.

Optionally, the third first transmitting module includes:
a first transmitting submodule, configured for the first terminal to send the first control information to the second terminal when a first condition is met, where the first condition meets at least one of the following:
that a remaining duration of the COT is greater than or equal to a pre-configured first threshold;
that duration of performing the Type 1 channel access procedure is less than or equal to a pre-configured second threshold;
that the remaining number of transmissions of the first terminal is less than or equal to a pre-configured third threshold;
that request information transmitted by the second terminal to the first terminal is received by the first terminal, where the request information is used to indicate that reception of the first control information transmitted by the first terminal is expected;
that the first terminal has a service to be transmitted to the second terminal;
that a higher-layer configuration or pre-configuration supports COT sharing;
that the first terminal supports COT sharing;
that a value of a service priority of the first terminal is less than a preset service priority threshold value;
that a value of a channel access priority of the first terminal is less than a channel access priority threshold value; or
that a time-frequency resource occupancy percentage of the first terminal is less than a time-frequency resource percentage value within the COT that is configured or pre-configured by a higher layer.

Optionally, the apparatus further includes:
a third execution module, configured to: when a third condition is met, determine to end the Type 1 channel access procedure, and perform a Type 2 channel access procedure on the part of the first target resource based on the second control information, where
the second control information includes information related to a COT determined by the second terminal.

It should be noted that the third condition includes at least one of the following:
that a service priority of the first terminal is lower than or equal to a service priority of the second terminal;
that a channel access priority of the first terminal is lower than a channel access priority of the second terminal; or
that a remaining duration of the COT of the second terminal is greater than a third time threshold value, where
the third time threshold value is a value configured by a higher layer, or a value predefined, pre-configured, or configured by a protocol.

Optionally, the apparatus further includes:
a third determining module, configured to determine a maximum decoding processing delay.

It should be noted that the first terminal is capable of performing at least one of the following within the maximum decoding processing delay:
performing, by the first terminal, service transmission to the second terminal; or
transmitting, by the first terminal, second placeholder information to the second terminal, where duration of the second placeholder information is less than or equal to a fourth preset threshold value.

As shown in FIG. 11, an optional embodiment of the present disclosure further provides a channel access processing apparatus applied to sidelink. The apparatus includes:
a third processing module 30, configured for a second terminal to receive first control information transmitted by a first terminal, where the first control information includes information related to a COT determined by the first terminal; and
a fourth processing module 40, configured to perform information transmission based on the first control information.

Optionally, the fourth processing module 40 includes:
a fifth determining unit, configured to determine a remaining duration of the COT based on the first control information; and
a first processing unit, configured to: if a time for transmitting the second target resource determined by the second terminal on the first terminal is within the remaining duration of the COT, perform, by the second terminal, a Type 2 channel access procedure for the information transmission.

It should be noted that a start time of the second terminal performing the Type 2 channel access procedure is a previous time unit of a time unit at which the second target resource is located; or
a start time of the second terminal performing the Type 2 channel access procedure is a time unit at which the second target resource is located.

Optionally, the fourth processing module 40 further includes:
a sixth determining unit, configured to determine a remaining duration of the COT based on the first control information;
a seventh determining unit, configured to perform, by the second terminal based on the remaining duration of the COT, resource selection and determine the second target resource; and
a second processing unit, configured to perform the information transmission based on the second target resource and the first control information.

A mobile terminal of another embodiment of the present disclosure, as shown in FIG. 12, includes a transceiver 1210, a processor 1200, a memory 1220, and a program or instructions stored on the memory 1220 and executable on the processor 1200. When the processor 1200 executes the program or instructions, the foregoing channel access processing method applied to sidelink is implemented.

The transceiver 1210 is configured to receive and send data under the control of the processor 1200.

In FIG. 12, a bus architecture may include any quantity of interconnected buses and bridges, and specifically interconnect various circuits of one or more processors represented by the processor 1200 and a memory represented by the memory 1220. The bus architecture may further interconnect various other circuits such as a peripheral device, a voltage regulator, and a power management circuit. These are all well known in the art, and therefore are not further described herein. The bus interface provides an interface. The transceiver 1210 may be a plurality of elements, including a transmitter and a receiver, and provides units for communicating with a variety of other apparatuses over a transmission medium. For different user devices, a user interface may alternatively be an interface capable of externally or internally connecting a required device, and the connected device includes, but is not limited to, a keypad, a display, a speaker, a microphone, a joystick, or the like.

The processor 1200 is responsible for management of the bus architecture and general processing, and the memory 1220 may store data for use by the processor 1200 when the processor 1200 operates.

A network side device of another embodiment of the present disclosure, as shown in FIG. 13, includes a transceiver 1310, a processor 1300, a memory 1320, and a program or instructions stored on the memory 1320 and executable on the processor 1300. When the processor 1300 executes the program or instructions, the foregoing channel access processing method applied to sidelink is implemented.

The transceiver 1310 is configured to receive and send data under the control of the processor 1300.

In FIG. 13, a bus architecture may include any quantity of interconnected buses and bridges, and specifically interconnect various circuits of one or more processors represented by the processor 1300 and a memory represented by the memory 1320. The bus architecture may further interconnect various other circuits such as a peripheral device, a voltage regulator, and a power management circuit. These are all well known in the art, and therefore are not further described herein. The bus interface provides an interface. The transceiver 1310 may be a plurality of elements, including a transmitter and a receiver, and provides units for communicating with a variety of other apparatuses over a transmission medium. The processor 1300 is responsible for management of the bus architecture and general processing, and the memory 1320 may store data for use by the processor 1300 when the processor 1300 operates.

An embodiment of the present disclosure further provides a network side device, including: a memory, a processor, and a computer program stored on the memory and executable on the processor. When the computer program is executed by the processor, the processes of the embodiments of the foregoing channel access processing method applied to sidelink are implemented, with the same technical effects achieved. To avoid repetition, details are not described herein again.

A readable storage medium of an embodiment of the present disclosure stores a program or instructions. When the program or instructions are executed by a processor, the steps of the channel access processing method applied to sidelink as described above are implemented, with the same technical effects achieved. To avoid repetition, details are not described herein again.

The processor is a processor in the channel access processing method applied to sidelink described in the foregoing embodiments. The readable storage medium includes a computer-readable storage medium, such as a computer read-only memory (Read-Only Memory, ROM), a random access memory (Random Access Memory, RAM), a magnetic disk, or a compact disc.

It should be further noted that the terminal described in the specification includes but is not limited to a smartphone, a tablet computer, or the like, and many of the functional components described are called modules in order to more particularly emphasize the independence of their implementations.

In the embodiments of the present disclosure, the modules may be implemented using software so as to be executed by various types of processors. An identified module of executable codes may include, for example, one or more physical or logical blocks of computer instructions, which may be structured, for example, as an object, procedure, or function. Nevertheless, the executable codes of the identified module do not need to be physically located together, but may include different instructions stored in different physical locations. These instructions, when combined logically together, constitute the module and achieve the specified purpose of the module.

Actually, the module of executable codes can be a single instruction or many instructions, and can even be distributed over a plurality of different code segments, distributed among different programs, and distributed across a plurality of memory devices. Likewise, operation data can be identified within the module and can be embodied in any suitable form and organized within any suitable type of data structure. The operation data may be collected as a single data set, or may be distributed at different locations (including on different storage devices), and may exist, at least in part, solely as electronic signals on a system or network.

When the module can be implemented using software, taking into account the level of hardware technology in the related art, the module can be implemented using software. Without considering the cost, those skilled in the art can build corresponding hardware circuits to implement corresponding functions. The hardware circuits include conventional very large scale integration (VLSI) circuits or gate arrays and semiconductors or other discrete components in the related art such as logic chips and transistors. The module can also be implemented using programmable hardware devices such as field programmable gate arrays, programmable array logic, programmable logic devices, or the like.

The foregoing descriptions are merely the preferred implementations of the present disclosure. It should only be noted that those of ordinary skill in the art may further make various improvements and modifications without departing from the principles of the present disclosure, and these improvements and modifications also fall within the protection scope of the present disclosure.

## Claims

1. A channel access processing method applied to sidelink, wherein the method is applied to a first terminal, and comprises:
performing (100), by the first terminal, resource selection to determine a first target resource;
performing (200) a Type 1 channel access procedure on at least a part of the first target resource to determine whether a channel is idle and a channel occupancy time, COT; and
transmitting, by the first terminal, first control information to a second terminal, wherein the first control information comprises information related to the COT determined by the first terminal,
wherein
the first control information comprises at least one of: an ID of the first terminal, an ID of a terminal expected to receive shared COT information, or a channel access priority,
and wherein
the determined first target resource comprises resources that meet a second condition and are non-contiguous in time domain among available resources, wherein the second condition is that a second time interval between two consecutive transmissions is greater than a first preset threshold value.

2. The method according to claim 1, wherein the performing, by the first terminal, resource selection to determine a first target resource comprises:
determining a time for triggering the resource selection;
determining a resource selection window based on the time for triggering the resource selection; and
determining the first target resource based on the resource selection window, wherein
a first time interval T1 between a start time of the resource selection window and the time for triggering the resource selection is determined by a transmitting processing delay, a resource selection processing delay of the first terminal, and minimum duration of performing the Type 1 channel access procedure, wherein the first time interval T1 comprises at least one of following:
the first time interval T1 being greater than or equal to zero;
the first time interval T1 being less than or equal to the transmitting processing delay;
the first time interval T1 being greater than the minimum duration; or
the first time interval T1 being greater than a sum of the minimum duration and the resource selection processing delay.

3. The method according to claim 1, wherein the determined first target resource comprises at least one of the following:
resources that are contiguous in time domain among available resources;
resources that are contiguous in time domain with resources reserved by other terminals among available resources;
resources that are within a same maximum channel occupancy time among available resources; or
resources that are within a same maximum channel occupancy time with resources reserved by other terminals among available resources.

4. The method according to claim 1, wherein the performing a Type 1 channel access procedure on at least a part of the first target resource comprises:
determining a first candidate time for starting the Type 1 channel access procedure, and/or a second candidate time for starting the Type 1 channel access procedure;
determining, based on the first candidate time and/or the second candidate time, an LBT start time for performing the Type 1 channel access procedure; and
performing the Type 1 channel access procedure on the part of the first target resource based on the LBT start time.

5. The method according to claim 4, wherein the determining an LBT start time for performing the Type 1 channel access procedure comprises:
in a case that the second candidate time is later than or the same as the first candidate time, determining that the LBT start time is later than or the same as the first candidate time and earlier than or the same as the second candidate time; or
in a case that the second candidate time is earlier than the first candidate time, determining that the LBT start time is later than or the same as the first candidate time.

6. The method according to claim 5, wherein the determining a first candidate time comprises:
determining a first start time for triggering the first terminal to perform the resource selection, and a processing delay of the first terminal performing the resource selection; and
determining the first candidate time using a first formula: A1 = B1 + C1, wherein
A1 represents the first candidate time, B1 represents the first start time, and C1 represents the processing delay of the first terminal performing the resource selection.

7. The method according to claim 6, wherein the determining a second candidate time comprises:
determining, based on the first target resource, a time at which a resource corresponding to the Type 1 channel access procedure among the first target resource is located, and a first duration for performing the Type 1 channel access procedure; and
determining the second candidate time according to a second formula: A2 = B2 - C2; or
determining duration required for a transport block TB of the first target resource, a latest time of a resource selection window for the first target resource, and the first duration; and
determining the second candidate time according to a third formula: A2 = B3 - C2 - D1, wherein
A2 represents the second candidate time, B2 represents the time at which the resource is located, C2 represents the first duration, B3 represents the latest time of the resource selection window, and D1 represents the duration required for the transport block TB.

8. The method according to claim 1, wherein after the COT is determined, the method further comprises:
determining a retransmission time of the first terminal; and
if the retransmission time is within the range of the COT, performing a Type 2 channel access procedure for retransmission of at least the part of the first target resource; or
if the retransmission time is outside the range of the COT, performing the Type 1 channel access procedure for retransmission of at least the part of the first target resource.

9. The method according to claim 1, wherein the transmitting, by the first terminal, the first control information to a second terminal comprises:
transmitting, by the first terminal, the first control information to the second terminal when a first condition is met, wherein the first condition meets at least one of following:
that a remaining duration of the COT is greater than or equal to a pre-configured first threshold;
that the first terminal has a service to be transmitted to the second terminal;
that a higher-layer configuration or pre-configuration supports COT sharing; or
that the first terminal supports COT sharing.

10. The method according to claim 1, wherein in a case that second control information transmitted by a second terminal to the first terminal is received during performing the Type 1 channel access procedure on at least the part of the first target resource,
the method further comprises:
when a second condition is met, determining to end the Type 1 channel access procedure, and performing a Type 2 channel access procedure on the part of the first target resource based on the second control information, wherein
the second control information comprises information related to a COT determined by the second terminal, wherein the second condition comprises at least one of the following:
that a service priority of the first terminal is lower than or equal to a service priority of the second terminal;
that a channel access priority of the first terminal is lower than a channel access priority of the second terminal; or
a remaining duration of the COT of the second terminal is greater than a third time threshold value.

11. The method according to claim 1, wherein before the transmitting, by the first terminal, the first control information to a second terminal, the method further comprises:
determining a maximum decoding processing delay.

12. The method according to claim 11, wherein the first terminal is capable of performing at least one of the following within the maximum decoding processing delay:
performing, by the first terminal, service transmission to the second terminal; or
transmitting, by the first terminal, second placeholder information to the second terminal, wherein duration of the second placeholder information is less than or equal to a fourth preset threshold value.

13. A terminal device, comprising: a transceiver (1210), a processor (1200), a memory (1220), and a program or instructions stored on the memory and executable on the processor, wherein when the processor executes the program or instructions, the channel access processing method applied to sidelink according to any one of claims 1 to 12 is implemented.

14. A readable storage medium having a program or instructions stored thereon, wherein when the processor executes the program or instructions, the channel access processing method applied to sidelink according to any one of claims 1 to 12 is implemented.

## Patentansprüche

1. Ein Kanalzugriffsverarbeitungsverfahren, das auf Sidelink angewendet wird, wobei das Verfahren auf ein erstes Endgerät angewendet wird und Folgendes beinhaltet:
Durchführen (100), durch das erste Endgerät, einer Ressourcenauswahl zum Bestimmen einer ersten Zielressource;
Durchführen (200) einer Kanalzugriffsprozedur vom Typ 1 auf mindestens einen Teil der ersten Zielressource, um zu bestimmen, ob ein Kanal frei ist, und um eine Kanalbelegungszeit, COT, zu bestimmen; und
Übertragen, durch das erste Endgerät, von ersten Steuerinformationen an ein zweites Endgerät, wobei die ersten Steuerinformationen Informationen beinhalten, die sich auf die COT beziehen, die durch das erste Endgerät bestimmt wird,
wobei
die ersten Steuerinformationen mindestens eines von Folgendem beinhalten: eine ID des ersten Endgeräts, eine ID eines Endgeräts, von dem erwartet wird, dass es gemeinsam genutzte COT-Informationen empfängt, oder eine Kanalzugriffspriorität, und wobei
die bestimmte erste Zielressource Ressourcen beinhaltet, die eine zweite Bedingung erfüllen und im Zeitbereich unter verfügbaren Ressourcen nicht zusammenhängend sind, wobei die zweite Bedingung ist, dass ein zweites Zeitintervall zwischen zwei aufeinanderfolgenden Übertragungen größer als ein erster voreingestellter Schwellenwert ist.

2. Verfahren gemäß Anspruch 1, wobei das Durchführen, durch das erste Endgerät, einer Ressourcenauswahl zum Bestimmen einer ersten Zielressource Folgendes beinhaltet:
Bestimmen einer Zeit zum Auslösen der Ressourcenauswahl;
Bestimmen eines Ressourcenauswahlfensters basierend auf der Zeit zum Auslösen der Ressourcenauswahl; und
Bestimmen der ersten Zielressource basierend auf dem Ressourcenauswahlfenster, wobei
ein erstes Zeitintervall T1 zwischen einer Startzeit des Ressourcenauswahlfensters und
der Zeit zum Auslösen der Ressourcenauswahl durch eine
Übertragungsverarbeitungsverzögerung, eine
Ressourcenauswahlverarbeitungsverzögerung des ersten Endgeräts und eine Mindestdauer des Durchführens der Kanalzugriffsprozedur vom Typ 1 bestimmt wird, wobei das erste Zeitintervall T1 mindestens eines der Folgenden beinhaltet:
das erste Zeitintervall T1 ist größer als oder gleich null;
das erste Zeitintervall T1 ist kleiner als oder gleich der
Übertragungsverarbeitungsverzögerung;
das erste Zeitintervall T1 ist größer als die Mindestdauer; oder
das erste Zeitintervall T1 ist größer als eine Summe der Mindestdauer und der Ressourcenauswahlverarbeitungsverzögerung.

3. Verfahren gemäß Anspruch 1, wobei die bestimmte erste Zielressource mindestens eines der Folgenden beinhaltet:
Ressourcen, die im Zeitbereich unter verfügbaren Ressourcen zusammenhängend sind;
Ressourcen, die im Zeitbereich mit von anderen Endgeräten reservierten Ressourcen unter verfügbaren Ressourcen zusammenhängend sind;
Ressourcen, die innerhalb einer gleichen maximalen Kanalbelegungszeit unter verfügbaren Ressourcen sind; oder
Ressourcen, die innerhalb einer gleichen maximalen Kanalbelegungszeit mit Ressourcen sind, die von anderen Endgeräten unter verfügbaren Ressourcen reserviert sind.

4. Verfahren gemäß Anspruch 1, wobei das Durchführen einer Kanalzugriffsprozedur vom Typ 1 auf mindestens einen Teil der ersten Zielressource Folgendes beinhaltet:
Bestimmen einer ersten Kandidatenzeit zum Starten der Kanalzugriffsprozedur vom Typ 1 und/oder einer zweiten Kandidatenzeit zum Starten der Kanalzugriffsprozedur vom Typ 1;
Bestimmen, basierend auf der ersten Kandidatenzeit und/oder der zweiten Kandidatenzeit, einer LBT-Startzeit zum Durchführen der Kanalzugriffsprozedur vom Typ 1; und
Durchführen der Kanalzugriffsprozedur vom Typ 1 an dem Teil der ersten Zielressource basierend auf der LBT-Startzeit.

5. Verfahren gemäß Anspruch 4, wobei das Bestimmen einer LBT-Startzeit zum Durchführen der Kanalzugriffsprozedur vom Typ 1 Folgendes beinhaltet:
in einem Fall, dass die zweite Kandidatenzeit später als oder gleich wie die erste Kandidatenzeit ist, Bestimmen, dass die LBT-Startzeit später als oder gleich der ersten Kandidatenzeit und früher als oder gleich der zweiten Kandidatenzeit ist; oder
in einem Fall, dass die zweite Kandidatenzeit früher als die erste Kandidatenzeit ist, Bestimmen, dass die LBT-Startzeit später als oder gleich der ersten Kandidatenzeit ist.

6. Verfahren gemäß Anspruch 5, wobei das Bestimmen einer ersten Kandidatenzeit Folgendes beinhaltet:
Bestimmen einer ersten Startzeit zum Auslösen des ersten Endgeräts zur Durchführung der Ressourcenauswahl und einer Verarbeitungsverzögerung des ersten Endgeräts, das die Ressourcenauswahl durchführt; und
Bestimmen der ersten Kandidatenzeit unter Verwendung einer ersten Formel:
A1 = B1 + C1, wobei
A1 die erste Kandidatenzeit darstellt, B1 die erste Startzeit darstellt und C1 die Verarbeitungsverzögerung des ersten Endgeräts, das die Ressourcenauswahl durchführt, darstellt.

7. Verfahren gemäß Anspruch 6, wobei das Bestimmen einer zweiten Kandidatenzeit Folgendes beinhaltet:
Bestimmen, basierend auf der ersten Zielressource, einer Zeit, zu der sich eine Ressource befindet, die der Kanalzugriffsprozedur vom Typ 1 in der ersten Zielressource entspricht, und einer ersten Dauer zur Durchführung der Kanalzugriffsprozedur vom Typ 1; und
Bestimmen der zweiten Kandidatenzeit gemäß einer zweiten Formel: A2 = B2 - C2; oder
Bestimmen der für einen Transportblock der ersten Zielressource erforderlichen Dauer, der spätesten Zeit eines Ressourcenauswahlfensters für die erste Zielressource und der ersten Dauer; und
Bestimmen der zweiten Kandidatenzeit gemäß einer dritten Formel: A2 = B3 - C2 - D1, wobei
A2 die zweite Kandidatenzeit darstellt, B2 die Zeit darstellt, zu der sich die Ressource befindet, C2 die erste Dauer darstellt, B3 die späteste Zeit des Ressourcenauswahlfensters darstellt und D1 die Dauer darstellt, die für den Transportblock TB erforderlich ist.

8. Verfahren gemäß Anspruch 1, wobei, nachdem die COT bestimmt wurde, das Verfahren ferner Folgendes beinhaltet:
Bestimmen einer Neuübertragungszeit des ersten Endgeräts; und
wenn die Neuübertragungszeit innerhalb des Bereichs der COT liegt, Durchführen einer Kanalzugriffsprozedur vom Typ 2 zur Neuübertragung von mindestens dem Teil der ersten Zielressource; oder
wenn die Neuübertragungszeit außerhalb des Bereichs der COT liegt, Durchführen der Kanalzugriffsprozedur vom Typ 1 zur Neuübertragung von mindestens dem Teil der ersten Zielressource.

9. Verfahren gemäß Anspruch 1, wobei das Übertragen, durch das erste Endgerät, der ersten Steuerinformationen an ein zweites Endgerät Folgendes beinhaltet:
Übertragen, durch das erste Endgerät, der ersten Steuerinformationen an das zweite Endgerät, wenn eine erste Bedingung erfüllt ist, wobei die erste Bedingung mindestens eines von Folgendem erfüllt:
dass eine verbleibende Dauer der COT größer als oder gleich einem vorkonfigurierten ersten Schwellenwert ist;
dass das erste Endgerät einen Dienst hat, der an das zweite Endgerät übertragen werden soll;
dass eine Konfiguration höherer Schichten oder eine Vorkonfiguration COT-Sharing unterstützt; oder
dass das erste Endgerät COT-Sharing unterstützt.

10. Verfahren gemäß Anspruch 1, wobei in einem Fall, dass zweite Steuerinformationen, die durch ein zweites Endgerät an das erste Endgerät übertragen werden, während der Durchführung der Kanalzugriffsprozedur vom Typ 1 auf mindestens dem Teil der ersten Zielressource empfangen werden,
das Verfahren ferner Folgendes beinhaltet:
wenn eine zweite Bedingung erfüllt ist, Bestimmen, dass die Kanalzugriffsprozedur vom Typ 1 beendet wird, und Durchführen einer Kanalzugriffsprozedur vom Typ 2 auf dem Teil der ersten Zielressource basierend auf den zweiten Steuerinformationen, wobei die zweiten Steuerinformationen Informationen beinhalten, die sich auf eine COT beziehen, die durch das zweite Endgerät bestimmt wird, wobei die zweite Bedingung mindestens eines von Folgendem beinhaltet:
dass eine Dienstpriorität des ersten Endgeräts niedriger als oder gleich einer Dienstpriorität des zweiten Endgeräts ist;
dass eine Kanalzugriffspriorität des ersten Endgeräts niedriger als eine Kanalzugriffspriorität des zweiten Endgeräts ist; oder
eine verbleibende Dauer der COT des zweiten Endgeräts größer als ein dritter Zeitschwellenwert ist.

11. Verfahren gemäß Anspruch 1, wobei vor dem Übertragen, durch das erste Endgerät, der ersten Steuerinformationen an ein zweites Endgerät das Verfahren ferner Folgendes beinhaltet:
Bestimmen einer maximalen Decodierungsverarbeitungsverzögerung.

12. Verfahren gemäß Anspruch 11, wobei das erste Endgerät in der Lage ist, mindestens eines der Folgenden innerhalb der maximalen Decodierungsverarbeitungsverzögerung durchzuführen:
Durchführen, durch das erste Endgerät, einer Dienstübertragung an das zweite Endgerät; oder
Übertragen, durch das erste Endgerät, von zweiten Platzhalterinformationen an das zweite Endgerät, wobei die Dauer der zweiten Platzhalterinformationen kleiner als oder gleich einem vierten voreingestellten Schwellenwert ist.

13. Eine Endgerätevorrichtung, die Folgendes beinhaltet: einen Transceiver (1210), einen Prozessor (1200), einen Speicher (1220) und ein Programm oder Anweisungen, die auf dem Speicher gespeichert sind und auf dem Prozessor ausführbar sind, wobei, wenn der Prozessor das Programm oder die Anweisungen ausführt, das Kanalzugriffsverarbeitungsverfahren, das auf Sidelink angewendet wird, gemäß einem der Ansprüche 1 bis 12 implementiert wird.

14. Ein lesbares Speichermedium mit einem darauf gespeicherten Programm oder darauf gespeicherten Anweisungen, wobei, wenn der Prozessor das Programm oder die Anweisungen ausführt, das Kanalzugriffsverarbeitungsverfahren, das auf Sidelink angewendet wird, gemäß einem der Ansprüche 1 bis 12 implementiert wird.

## Revendications

1. Un procédé de traitement d'accès au canal appliqué à une liaison latérale, le procédé étant appliqué à un premier terminal, et comprenant :
la réalisation (100), par le premier terminal, d'une sélection de ressource afin de déterminer une première ressource cible ;
la réalisation (200) d'une procédure d'accès au canal de Type 1 sur au moins une partie de la première ressource cible afin de déterminer si un canal est inactif et un temps d'occupation de canal, COT ; et
la transmission, par le premier terminal, de premières informations de commande à un deuxième terminal, les premières informations de commande comprenant des informations relatives au COT déterminé par le premier terminal,
dans lequel
les premières informations de commande comprennent au moins un élément parmi : un identifiant du premier terminal, un identifiant d'un terminal censé recevoir des informations de COT partagé, ou une priorité d'accès au canal,
et dans lequel
la première ressource cible déterminée comprend des ressources qui satisfont à une deuxième condition et qui sont non contiguës dans le domaine temporel parmi des ressources disponibles, la deuxième condition étant qu'un deuxième intervalle temporel entre deux transmissions consécutives soit supérieur à une première valeur de seuil prédéfinie.

2. Le procédé selon la revendication 1, dans lequel la réalisation, par le premier terminal, d'une sélection de ressource afin de déterminer une première ressource cible comprend :
la détermination d'un instant de déclenchement de la sélection de ressource ;
la détermination d'une fenêtre de sélection de ressource sur la base de l'instant de déclenchement de la sélection de ressource ; et
la détermination de la première ressource cible sur la base de la fenêtre de sélection de ressource, dans lequel
un premier intervalle temporel T1 entre un instant de début de la fenêtre de sélection de ressource et l'instant de déclenchement de la sélection de ressource est déterminé par un délai de traitement de transmission, un délai de traitement de sélection de ressource du premier terminal, et une durée minimale de réalisation de la procédure d'accès au canal de Type 1, dans lequel le premier intervalle temporel T1 comprend au moins l'un des éléments suivants :
le fait que le premier intervalle temporel T1 est supérieur ou égal à zéro ;
le fait que le premier intervalle temporel T1 est inférieur ou égal au délai de traitement de transmission ;
le fait que le premier intervalle temporel T1 est supérieur à la durée minimale ; ou
le fait que le premier intervalle temporel T1 est supérieur à une somme de la durée minimale et du délai de traitement de sélection de ressource.

3. Le procédé selon la revendication 1, dans lequel la première ressource cible déterminée comprend au moins l'un des éléments suivants :
des ressources qui sont contiguës dans le domaine temporel parmi des ressources disponibles ;
des ressources qui sont contiguës dans le domaine temporel avec des ressources réservées par d'autres terminaux parmi des ressources disponibles ;
des ressources qui sont à l'intérieur d'un même temps d'occupation de canal maximal parmi des ressources disponibles ; ou
des ressources qui sont à l'intérieur d'un même temps d'occupation de canal maximal avec des ressources réservées par d'autres terminaux parmi des ressources disponibles.

4. Le procédé selon la revendication 1, dans lequel la réalisation d'une procédure d'accès au canal de Type 1 sur au moins une partie de la première ressource cible comprend :
la détermination d'un premier instant candidat afin de commencer la procédure d'accès au canal de Type 1, et/ou d'un deuxième instant candidat afin de commencer la procédure d'accès au canal de Type 1 ;
la détermination, sur la base du premier instant candidat et/ou du deuxième instant candidat, d'un instant de début LBT afin de réaliser la procédure d'accès au canal de Type 1 ; et
la réalisation de la procédure d'accès au canal de Type 1 sur la partie de la première ressource cible sur la base de l'instant de début LBT.

5. Le procédé selon la revendication 4, dans lequel la détermination d'un instant de début LBT afin de réaliser la procédure d'accès au canal de Type 1 comprend :
dans un cas où le deuxième instant candidat est postérieur ou identique au premier instant candidat, la détermination que l'instant de début LBT est postérieur ou identique au premier instant candidat et antérieur ou identique au deuxième instant candidat ; ou
dans un cas où le deuxième instant candidat est antérieur au premier instant candidat, la détermination que l'instant de début LBT est postérieur ou identique au premier instant candidat.

6. Le procédé selon la revendication 5, dans lequel la détermination d'un premier instant candidat comprend :
la détermination d'un premier instant de début pour le déclenchement du premier terminal afin de réaliser la sélection de ressource, et d'un délai de traitement du premier terminal réalisant la sélection de ressource ; et
la détermination du premier instant candidat en utilisant une première formule : $A 1 = B 1 + C 1 ,$ où
A1 représente le premier instant candidat, B1 représente le premier instant de début, et
C1 représente le délai de traitement du premier terminal réalisant la sélection de ressource.

7. Le procédé selon la revendication 6, dans lequel la détermination d'un deuxième instant candidat comprend :
la détermination, sur la base de la première ressource cible, d'un instant auquel une ressource correspondant à la procédure d'accès au canal de Type 1 parmi la première ressource cible est située, et d'une première durée afin de réaliser la procédure d'accès au canal de Type 1 ; et
la détermination du deuxième instant candidat selon une deuxième formule :
$A 2 = B 2 - C 2 ;$ ou
la détermination d'une durée requise pour un bloc de transport TB de la première ressource cible, d'un instant le plus tardif d'une fenêtre de sélection de ressource pour la première ressource cible, et de la première durée ; et
la détermination du deuxième instant candidat selon une troisième formule :
$A 2 = B 3 - C 2 - D 1 ,$ où
A2 représente le deuxième instant candidat, B2 représente l'instant auquel la ressource est située, C2 représente la première durée, B3 représente l'instant le plus tardif de la fenêtre de sélection de ressource, et D1 représente la durée requise pour le bloc de transport TB.

8. Le procédé selon la revendication 1, après la détermination du COT, le procédé comprenant en outre :
la détermination d'un instant de retransmission du premier terminal ; et
si l'instant de retransmission est à l'intérieur de la plage du COT, la réalisation d'une procédure d'accès au canal de Type 2 pour la retransmission d'au moins la partie de la première ressource cible ; ou
si l'instant de retransmission est à l'extérieur de la plage du COT, la réalisation de la procédure d'accès au canal de Type 1 pour la retransmission d'au moins la partie de la première ressource cible.

9. Le procédé selon la revendication 1, dans lequel la transmission, par le premier terminal, des premières informations de commande à un deuxième terminal comprend :
la transmission, par le premier terminal, des premières informations de commande au deuxième terminal lorsqu'une première condition est satisfaite, la première condition satisfaisant à au moins un élément parmi :
le fait qu'une durée restante du COT est supérieure ou égale à un premier seuil préconfiguré ;
le fait que le premier terminal dispose d'un service à transmettre au deuxième terminal ;
le fait qu'une configuration de couche supérieure ou une préconfiguration prend en charge un partage de COT ; ou
le fait que le premier terminal prend en charge un partage de COT.

10. Le procédé selon la revendication 1, dans un cas où des deuxièmes informations de commande transmises par un deuxième terminal au premier terminal sont reçues pendant la réalisation de la procédure d'accès au canal de Type 1 sur au moins la partie de la première ressource cible,
le procédé comprenant en outre :
lorsqu'une deuxième condition est satisfaite, la détermination de mettre fin à la procédure d'accès au canal de Type 1, et la réalisation d'une procédure d'accès au canal de Type 2 sur la partie de la première ressource cible sur la base des deuxièmes informations de commande, dans lequel
les deuxièmes informations de commande comprennent des informations relatives à un COT déterminé par le deuxième terminal, la deuxième condition comprenant au moins un élément parmi :
le fait qu'une priorité de service du premier terminal est inférieure ou égale à une priorité de service du deuxième terminal ;
le fait qu'une priorité d'accès au canal du premier terminal est inférieure à une priorité d'accès au canal du deuxième terminal ; ou
une durée restante du COT du deuxième terminal est supérieure à une troisième valeur de seuil temporelle.

11. Le procédé selon la revendication 1, avant la transmission, par le premier terminal, des premières informations de commande à un deuxième terminal, le procédé comprenant en outre :
la détermination d'un délai de traitement de décodage maximal.

12. Le procédé selon la revendication 11, dans lequel le premier terminal est capable de réaliser au moins l'un des éléments suivants dans le délai de traitement de décodage maximal :
la réalisation, par le premier terminal, d'une transmission de service au deuxième terminal ; ou
la transmission, par le premier terminal, de deuxièmes informations d'espace réservé au deuxième terminal, la durée des deuxièmes informations d'espace réservé étant inférieure ou égale à une quatrième valeur de seuil prédéfinie.

13. Un dispositif terminal, comprenant : un émetteur-récepteur (1210), un processeur (1200), une mémoire (1220), et un programme ou des instructions stockés sur la mémoire et exécutables sur le processeur, dans lequel, lorsque le processeur exécute le programme ou les instructions, le procédé de traitement d'accès au canal appliqué à une liaison latérale selon l'une quelconque des revendications 1 à 12 est mis en œuvre.

14. Un support de stockage lisible sur lequel est stocké/sont stockées un programme ou des instructions, dans lequel, lorsque le processeur exécute le programme ou les instructions, le procédé de traitement d'accès au canal appliqué à une liaison latérale selon l'une quelconque des revendications 1 à 12 est mis en œuvre.
